(19) Europäisches Patentamt / European Patent Office / Office européen des brevets

(11) **EP 2 327 667 B1**

(12) **EUROPEAN PATENT SPECIFICATION**

(45) Date of publication and mention
of the grant of the patent:
**17.05.2017 Bulletin 2017/20**

(51) Int Cl.:
***C03C 13/00*** *(2006.01)*

(21) Application number: **10174684.0**

(22) Date of filing: **31.08.2010**

(54) **Saline soluble glass fiber composition**

In Salzlösung lösliche Glasfaserzusammensetzung

Composition de fibre de verre soluble saline

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **27.11.2009 KR 20090115682**

(43) Date of publication of application:
**01.06.2011 Bulletin 2011/22**

(73) Proprietor: **KCC Corporation
Seoul 137-070 (KR)**

(72) Inventors:
• **Lee, Jin Heuk
Gyeonggi-do 446-912 (KR)**
• **Lee, Si Moo
Gyeonggi-do 446-912 (KR)**
• **Kim, Hong Kyeom
Daejeon 306-778 (KR)**
• **Jung, Won Sik
Gyeonggi-do 446-912 (KR)**

(74) Representative: **Eisenführ Speiser
Patentanwälte Rechtsanwälte PartGmbB
Postfach 10 60 78
28060 Bremen (DE)**

(56) References cited:
**EP-A1- 1 179 513      WO-A1-93/15028
WO-A1-97/49643      WO-A1-2006/048610
US-A- 5 714 421**

**Description**

**[Field of the Invention]**

The present invention relates to a saline soluble ceramic fiber composition for use as a high temperature insulator, specifically, a composition that is increased in solubility in an artificial saline body fluid containing $SiO_2$ as a network forming oxide, $CaO$ and $MgO$ as a modified oxide, $Al_2O_3$ as an intermediate oxide, $B_2O_3$ acting simultaneously as a flux and network oxide, and $Na_2O$ and $K_2O$ acting as a flux, all in appropriate amounts, In order to formulate a ceramic fiber composition for use as a high temperature insulator having excellent saline solubility. Furthermore, the present invention relates to a composition having improved solubility (biodegradability) in a saline body fluid as well as improved production yield during high temperature preparation processes, compared to existing saline soluble ceramic fiber compositions, due to high heat resistance by regulating the amount of $B_2O_3+Na_2O+K_2O$ contained as a flux.

**[Background of the Invention]**

Ceramic fibers have low heat conductivities as well as elongated shapes, and thus have been used as lagging materials, refrigerating materials, insulators, acoustic insulators, acoustic materials and filters.
'Fibers for a refractory insulator' is the collective name for refractory fibers that may be used at 600°C or higher, which is the service temperature of mineral wool. Fibrous blanket insulators for high temperatures are classified into five groups, from type 1 (732°C) to type 5 (1649°C) by ASTM C982, based on coefficients of shrinkage during heating at high temperature. A "safe service temperature" for fibers is usually defined as the temperature at which linear shrinkage of 5% or less occurs during heating at the relevant temperature for 24 hours.
The most commonly used fibers for refractory insulators are $Al_2O_3$-$SiO_2$ (RCF-AS)-based fibers, the safe service temperatures of which are between 1100~1260°C. Known prior arts relating to $Al_2O_3$-$SiO_2$-based fibers are as follows. U.S. Patent No. 2,873,197 and 4,555,492 disclose $Al_2O_3$-$SiO_2$-$ZrO_2$-based (RCF-ASZ based) fibers, wherein a certain amount of $ZrO_2$ component is added to the $Al_2O_3$-$SiO_2$-based composition, and describe that the safe service temperature of such fibers is increased to 1430°C.
U.S. Patent No. 4,055,434 discloses a fiber composition, wherein at most 16% of burned dolomite as a raw material of $CaO$ and $MgO$ is added to the $Al_2O_3$-$SiO_2$-based composition, and describes that such fibers have a heat resistance temperature between 760-1100°C. U.S. Patent No. 3,687,850 describes silica fibers with 76~90% $SiO_2$ content and 4~8% $Al_2O_3$ content having heat resistance up to 1093°C without precipitating its crystalline substance that are prepared by addition of acid to a fiber composition composed of $SiO_2$, $Al_2O_3$, $R_2O$, $RO$ and $B_2O_3$ to dissolve the $RO$, $R_2O$ and $B_2O_3$ components therein. The heat resistance and dissolution characteristics of an acid determine the conventional fibers for a refractory insulator, but the dissolution characteristics of a saline solution such as an artificial body fluid are not considered. In addition, since the fibers have high $Al_2O_3$ content (4% or higher), the solubility In physiological media may be low.
A recent report found that crushed fine fibers having low solubility in physiological media might be inhaled into the lungs upon respiration, resulting in harmful effects to the body. Therefore, inorganic fiber compositions have recently been carried out to minimize harmful effects and to obtain high temperature physical properties by increasing the solubility in physiological media.
Prior arts for glass fiber compositions that are highly soluble in physiological media are as follows. There are bioabsorbable glass compositions containing $CaF_2$, $ZnO$, $SrO$, $Na_2O$, $K_2O$, $Li_2O$, and the like, in addition to $CaO$ and $P_2O_5$ [US Patent No. 4,604,097]; fiber compositions containing $P_2O_5$, and the like, to the existing soda lime borosilicate glass fiber composition [International Publication WO92/0781]; and fiber compositions containing high amounts of $B_2O_3$ in the soda lime borosilicate composition in addition to $Na_2O$, and the like [US Patent No. 5,055,428]. However, since such compositions are usually composed of constituent regions with a $R_2O$ component, they have the disadvantage of low heat resistance. As such, they have no safe service temperature and are typically used as insulators for buildings at 350°C or less. Therefore, there are limitations to the use of biodegradable materials at high temperatures.
In addition, examples of fiber compositions as refractory fibers having high solubility in an artificial body fluid and which may be used at high temperature are as follows. There are modified fiber compositions that are increased in solubility in an artificial body fluid and whose refractory characteristics are improved by a decreased amount of $Al_2O_3$ and an increased amount of $CaO$ and $MgO$ in existing mineral wool compositions consisting of $CaO$, $MgO$, $SiO_2$ and $Al_2O_3$ [International Publication No. WO87/05007]; in fiber compositions obtained by addition of $MgO$, alkali oxide, $Al_2O_3$, $ZrO_2$, $B_2O_3$ and $Fe_2O_3$ to $SiO_2$ and $CaO$ [International Publication No. WO89/12032]; and in fiber compositions having a service temperature of 800~1000°C by decreasing the amount of $Al_2O_3$ from $SiO_2$, $CaO$ and $MgO$ [International Publication No. WO93/15028]. However, said compositions are merely fiber compositions that can only be used in fields of which the highest safe service temperature is 815°C, 1000°C (coefficient of linear shrinkage during heating of 5% or less for 24 hours). Furthermore, said fiber compositions comprise no flux component, which makes reduction of production yield and biodegradable performance inevitable.

In addition, examples of fiber compositions having the highest possible safe service temperature of 1260°C as well as good solubility in artificial body fluid are as follows. International Publication No. WO94/15883 describes fiber composition regions having an amount of $SiO_2$ higher than 21.8 mol% upon addition of $Al_2O_3$ and $ZrO_2$ to $SiO_2$, CaO or MgO-based compositions. It mentions that the regions having high $SiO_2$ content, such as 70.04 mol%, 73.09 mol% or 78.07 mol%, are difficult (high content of nonfibrous material) or impossible to be formed on the fibers.

International Publication No. WO97/16386 discloses biodegradable fiber compositions consisting of MgO and $SiO_2$ in regions having high content of $SiO_2$ and containing 1 % or less of CaO and 0~2% of $Al_2O_3$, $ZrO_2$ and $B_2O_3$ as a viscosity modifier. The regions also have a coefficient of linear shrinkage during heating of 4.5% or less at 1260°C and are easily formed on the fibers. However, the fiber articles of these regions have a large average diameter and thus high heat conductivity and relatively high coefficient of linear shrinkage during heating (3% or more) at the safe service temperature. Furthermore, the fibers have very low biodegradability relative to fibers prepared according to the present invention since excess $SiO_2$ was used to increase the safe service temperature and since deterioration in quality, including decreased production yield, increased dust on prepared fibers, and reduced tension strength of the products, is inevitable.

Representative examples of the developed ceramic fiber compositions are explained above. Based on the above prior arts, the ceramic fiber compositions require the following physical properties.

A method of transforming ceramic fiber compositions into fibers comprises a blowing process for the formation of fibers by compressed air or vapor, a spinning process for the formation of fibers by dropping a melt into a cylinder rotating at high speed, and the like. An ideal viscosity of the fiber compositions that are formed into fibers by the spinning or blowing process should be between 20~100 poises, or similar to the viscosity of the existing $SiO_2$-$Al_2O_3$-based compositions. If the viscosity is too high at the fiber forming temperature, the diameter of the fiber becomes too large, resulting in the production of thick nonfibrous materials (shot). If is the diameter is too low, the fibers become short and thin, resulting in the production of fine nonfibrous materials(shot). Generally, since the viscosity of a glass solution depends on the composition and temperature of the glass, the appropriate composition should be designed to maintain the appropriate fiber forming viscosity. In the case of high viscosity compositions, they are formed into fibers at high temperature. Thus, the appropriate viscosity near the fiber forming temperature must be controlled.

In addition, ceramic fibers for use as high temperature insulators have high thermal resistance that remains constant even after exposure to the service temperature. Therefore, as a furnace material, they have excellent durability even if repeated heat stresses are applied thereto. The service temperature of ceramic fibers is associated with shrinkage at that temperature. The shrinkage of fiber articles is affected by the viscosity of the glassy fiber composition at high temperature, the type and quantity of crystals produced and grown upon exposure to heat, the crystal precipitation temperature and the high temperature viscosity of remaining glassy phase after crystal precipitation. Since the crystals precipitated at high temperature usually have higher specific gravity compared to glassy fibers, stress occurs at the crystal interfaces due to precipitation and growth of the crystals, whereby the fibers are cut or modified for contraction. When fibers are present in a glassy phase without precipitation at high temperature, they will gradually be reduced in viscosity at relatively low temperature, resulting in increased contraction. Also, if the high viscosity temperature of the remaining glassy phase after precipitation of crystals is low, fiber shrinkage is increased following liquid-phase sintering and modification by viscous flow. Thus, fibers made of a composition having a low shrinkage ratio at high temperature should precipitate crystals at an appropriate quantity, rate and temperature. Furthermore, the solubility of ceramic fibers exposed to high temperature in the artificial body fluid remains constant. Thus, it is important to select a composition that is easily melted and formed into fibers, has a low coefficient of linear shrinkage during heating and has high solubility in artificial body fluid.

In addition, glass wool, mineral wool and ceramic fibers have excellent dissolution characteristics relative to asbestos, a proven carcinogen, and thus have not been proven harmful. Although the solubility of fibers in artificial body fluid is believed to be correlated with harmfulness, according to a toxicological examination by animal assay, fibers having a dissolution rate constant ($K_{dis}$) of 100 ng/cm$^2$hr or more do not cause fibrosis or tumors [Inhalation Toxicology, 12:269~ 280, 2000, Estimating *in vitro* glass fiber dissolution rate from composition, Walter Eastes]. The dissolution rate constant ($K_{dis}$) of current developed biodegradable fibers is in the range between 300~600 ng/cm$^2$hr. The present invention is intended to provide a fiber composition with minimal harmfulness relative to existing biodegradable ceramic fibers by fixing the baseline solubility of ceramic fiber compositions in artificial body fluid at 700 ng/cm$^2$hr or higher.

US 5714421 A discloses glass fibers for installation. In particular, the document discloses a glass composition which consists of (in wt%): $SiO_2$ 58,6; $Al_2O_3$ 0,58; $ZrO_2$ 3,57; MgO 2,72 and CaO 33,5 (Example 191).

WO 2006/048610 A1 aims at improving the mechanical properties of refractory alkaline earth silicate fibres, and proposes the presence of an alkali metal (e.g. $Na_2O$).

**[Summary of the Invention]**

The present invention is intended to provide a biodegradable ceramic fiber composition as a high temperature insulator with excellent thermal characteristics such as heat resistance, wherein harmfulness to the human body is minimized and the fibers may be easily prepared with improved yield using existing production equipment.

The present invention provides ceramic fibers having excellent high temperature physical properties and improved biodegradability that regulate a network forming oxide ($SiO_2$) that is used as a base for inorganic fibers as a high temperature insulator, a modified oxide (CaO, MgO), an intermediate oxide ($Al_2O_3$), $B_2O_3$ acting simultaneously as a network oxide and a flux, and a flux ($Na_2O$, $K_2O$), all in appropriate amounts. Particularly, it provides ceramic fibers having improved dissolution rate constants and yields by regulating the amounts of $B_2O_3$ and $Na_2O$ compared to existing biodegradable ceramic fibers.

The biodegradable ceramic fibers as high temperature insulators prepared using the present composition have improved solubility in artificial body fluid, compared to known ceramic fibers and known biodegradable ceramic fibers, such that they may be easily dissolved even upon inhalation into the human body. Thus, harmfulness to the human body is reduced. In addition, the biodegradable ceramic fibers have a coefficient of linear shrinkage of less than 3% during heating (maintained at 1100°C for 24 hours), as well as excellent biodegradability and thermal and mechanical characteristics equal to those of existing high temperature insulators. Additionally, by comprising an appropriate amount of flux, the amount of nonfibrous materials can be reduced and the production yield improved.

**[Detailed Description of the Invention]**

The present invention relates to a biodegradable ceramic fiber composition for a high temperature insulator comprising 58~67% by weight of $SiO_2$, 26~34% by weight of CaO, 2~8% by weight of MgO, 0.1~0.7% by weight of $Al_2O_3$, 0.2~1.1% by weight of $B_2O_3$, 0.3~1.1 % by weight of $B_2O_3+Na_2O+K_2O$ and 1% by weight or less of an impurity selected from $TiO_2$ or $Fe_2O_3$. The present invention is characterized by having a coefficient of linear shrinkage during heating of 3% or less at 1100°C as well as a dissolution rate constant in artificial body fluid of 700 ng/cm$^2$hr or higher.

The biodegradable ceramic compositions as high temperature insulators according to the present invention are explained in detail below.

$SiO_2$, a base for the ceramic fibers according to the present invention, constitutes 58~67% by weight of the total fiber composition. If the amount of $SiO_2$ is less than 58% by weight, then heat resistance, the most basic physical property of ceramic fibers as high temperature insulators, as well as productivity will rapidly deteriorate since reduced high temperature viscosity increases the ratio of formation into nonfibrous material. On the other hand, if the amount exceeds 67% by weight, then the viscosity for formation of the composition into fibers, fiber diameter, and the amount of nonfibrous material (shot) all increase, whereby quality loss occurs for all physical properties, for example, product touch, tension strength, and the like.

In addition, the biodegradable ceramic fiber composition according to the present invention comprises a certain amount of a modified oxide, CaO and MgO, for the improvement of solubility of the prepared fibers in artificial body fluid. CaO constitutes 26~34% by weight of the total fiber composition. If the amount of CaO is less than 26% by weight, then the biodegradability of fibers in artificial body fluid is reduced. If the amount of CaO exceeds 34% by weight, then the stability and coefficient of linear shrinkage during heating increase, since the amount of crystals precipitated on the prepared fibers is increased, such that the amount of $SiO_2$ in the fibers is relatively reduced. The other modified oxide added to increase the biodegradability of fibers, MgO, constitutes 2~8% by weight, or more preferably, 4~7% by weight of the total fiber composition. If the amount of MgO is less than 2% by weight, then the biodegradability of fibers in artificial body fluid will be reduced or the effect of inhibiting crystal growth due to the mixed alkali effect will be reduced on the prepared fibers. If the amount of MgO exceeds 8% by weight, then the viscosity of fiber formation will be increased while the melting temperature of the fibers will be decreased, since the melting point is close to the eutectic point zone of diopside and wollastonite. In addition, the desired effect of the present invention may be also achieved using raw materials that are relatively inexpensive, for example, dolomite, limestone, and the like, instead of the pure compound, as a component of MgO in formulating the present fiber composition.

The present invention comprises $Al_2O_3$ as an intermediate oxide. $Al_2O_3$ constitutes 0.1~0.7% by weight of the total fiber composition. If the amount of $Al_2O_3$ exceeds 1% by weight, then the solubility of the fibers in artificial body fluid will be reduced and the heat resistance temperature will be lowered.

In addition, the present fiber composition further comprises a low melting point oxide for forming glass ($B_2O_3$, $Na_2O$, $K_2O$ or a combination thereof) to improve the solubility of the prepared fibers in artificial body fluid. $B_2O_3$ is in the range of 0.2~1.1% by weight and $Na_2O+K_2O$ may be added such that $B_2O_3+Na_2O+K_2O$ is in the range of 0.3~1.1% by weight. Particularly, the added $B_2O_3$ and $Na_2O$ lower the viscosity for fiber formation during the preparation of ceramic fibers and improve productivity while reducing the nonfibrous ratio. They also improve biodegradability in saline artificial body fluid. Furthermore, $B_2O_3$ acts as a flux during high temperature melting to a lower heat ratio during fiber formation as well as a structural oxide in the ceramic fiber composition for maintenance of structural stability.

To improve the biodegradability of the fiber composition according to the present invention, the following general formula 1 must be satisfied.

### General formula 1

$1 \leq$ (% by weight of MgO) / (% by weight of $B_2O_3$ and $Na_2O$, in total) $\leq 23$

If the ratio by weight of the constituents in the above general formula 1 is less than 1, the fibers will be difficult to use as a refractory insulator due to reduced heat resistance. If the ratio exceeds 23, the viscosity for fiber formation increases and the production yield is reduced due to the increased fiber diameter.

The biodegradable ceramic fiber composition as a high temperature insulator according to the present invention may comprise 1% by weight or less of an impurity such as $TiO_2$ or $Fe_2O_3$ in the total fiber composition. Said impurity may be introduced depending on the purity of the raw materials to be used for the preparation of said fiber composition. However, if the amount of the impurity exceeds 1% by weight, then the reaction of the constituents in said fiber composition becomes hindered due to degeneration of physical properties of the prepared fibers.

The ceramic fibers according to the present invention, prepared using the fiber composition as above, have a nonfibrous material (shot) content of less than 40%, an average fiber diameter of 6 $\mu$m or less, a coefficient of linear shrinkage during heating (maintained at 1100°C for 24 hours) of 3% or less as well as a dissolution rate constant in artificial body fluid of 700 ng/cm$^2$hr or higher. In addition, the ceramic fibers according to the present invention have the above characteristics as well as economic feasibility, as they are prepared by conventional processes.

Meanwhile, a blowing method or spinning method may be applied to the formation of fibers using the present ceramic fiber composition. In applying the above method, the range of viscosity required for the fiber composition is 20-100 poises. The viscosity of molten material can be represented by a function of temperature and the relevant composition, wherein the viscosity of the molten material having the same composition depends on temperature. When the temperature of the molten solution during fiber formation is high, the viscosity is reduced. On the contrary, when the temperature for fiber formation is low, the viscosity increases, such that fiber formation is affected. If the viscosity of the fiber composition is too low at the temperature of fiber formation, the resulting fibers will be short and thin and be produced as nonfibrous materials (shot) with a reduced yield. Further, if the viscosity of the fiber composition is too high at the temperature of fiber formation, then the fibers will be large in diameter and formed as thick nonfibrous materials (shot). Therefore, to obtain appropriate physical characteristics during fiber formation, the characteristics (fiber diameter, amount of nonfibrous materials) of the prepared fibers may be measured in comparison to the existing RCF ($Al_2O_3$-$SiO_2$ based).

### [Examples]

The present invention is explained in more detail via examples according to the present invention below, the scope of which is not restricted by the following examples.

### [Measuring method]

1. Average fiber particle diameter: The average fiber diameter was measured by magnifying an object by 1000 times or higher using an electronic microscope, then repeating the measurement 500 times or more.

2. Amount of nonfibrous material: According to ASTM C892, the amount of nonfibrous material was measured. That is, the ceramic fibers were heat treated at 1260°C for 5 hours, after which about 10 g of the sample was exactly weighed to 0.0001 g ($W_0$). The weighed sample was then poured on a 30 mesh sieve and pressed with a rubber rod until it passed through the sieve.

The material passed through the above sieve was again passed through 50 and 70 mesh sieves. Particles that remained in each sieve were weighed ($W_1$), and the amount of nonfibrous material ($W_s$) was calculated using the following mathematical formula 1.

### Mathematical formula 1

$$W_s = \frac{W_1}{W_0} \times 100$$

where Ws represents the amount of nonfibrous material, $W_0$ represents the weight of the initial particles, and $W_1$ rep-

resents the weight of the remaining particles.

3. Production yield: The ratio of the total amount of fibrous material in the molten material tapped for a certain time was calculated using the following mathematical formula 2.

Mathematical formula 2

Production yield (%) = [the total amount of fibrous material/hour]/[the total amount of tapped molten material/hour]

4. Coefficient of linear shrinkage during heating: The physical properties of the prepared high temperature refractory insulator at high temperature were measured as a coefficient of linear shrinkage during heating, which is usually measured based on the change in length of the molded material made of the prepared fibers. To measure the coefficient of linear shrinkage during heating of the ceramic fibers, the fibers were prepared as a specimen with a pad. First, 220 g of fibers was sufficiently released in a 0.2% starch solution and poured into a 300x 200 mm mold. After the released fibers were adjusted to have low face discrepancy, a pad was prepared by draining through the bottom of the mold. The above pad was sufficiently dried in an oven at 50°C for 24 hours or longer and then cut to a size of 150×100×25 mm, onto which measuring points were marked with a material having sufficient heat resistance, such as platinum or ceramic. The distance between the measuring points was then measured using a vernier caliper, after which the above pad was positioned on a furnace, heated at 1100°C for 24 hours and 168 hours, and then slowly cooled. The distances between the measuring points on the above cooled specimen were measured, followed by comparison of the results before and after heat treatment and calculation of the coefficient of linear shrinkage using the following mathematical formula 3.

Mathematical formula 3

$$\text{Coefficient of Linear Shrinkage during Heating (\%)} = \frac{\ell_0 - \ell_1}{\ell_0} \times 100$$

wherein $\ell_0$ represents the minimum distance (mm) between the specimen marks and $\ell_1$ represents the length (mm) between specimen marks after heating.

5. Dissolution rate constant in artificial body fluid: The following method was used to determine the solubility of the prepared fibers in artificial body fluid. The detailed experimental method has been described in Law et al. (1990). The internal biodegradability of ceramic fibers was evaluated based on the solubility of fibers in artificial body fluid. Compared to internal retention times based on the above solubility, the dissolution rate constant ($K_{dis}$) was calculated using the following mathematical formula 4.

Mathematical formula 4

$$K_{dis} = \frac{d_0 \rho \sqrt{1 - \dfrac{M}{M_0}}}{2t}$$

wherein $d_0$ represents initial average fiber diameter, p represents initial fiber density, $M_0$ represents initial fiber weight, M represents the weight of the fibers remaining after dissolution, and t represents the experimental time. The initial fiber weight was quantified based on the specific surface area, which was measured using an automatic surface area analyzer (BET).

The amounts of constituents included in 1 L of artificial body fluid (Gamble solution) are represented in the following table 1.

Table 1

| Constituents of Artificial Body Fluid | Amount (g/L) |
|---|---|
| NaCl | 7.120 |
| $MgCl_2 \cdot 6H_2O$ | 0.212 |
| $CaCl_2 \cdot 2H_2O$ | 0.029 |
| $Na_2SO_4$ | 0.079 |
| $Na_2HPO_4$ | 0.148 |
| $NaHCO_3$ | 1.950 |
| Sodium tartrate$\cdot 2H_2O$ | 0.180 |
| Sodium citrate$\cdot 2H_2O$ | 0.152 |
| 90% Lactic acid | 0.156 |
| Glycine | 0.118 |
| Sodium pyruvate | 0.172 |

The present ceramic fibers and commercially available inorganic fibers were poured between thin layers of a 0.2 $\mu$m polycarbonate membrane filter fixed on a plastic filter support, through which the above artificial body fluid was filtered in order to measure the dissolution rate constant. Throughout the experiment, the artificial body fluid was controlled to have a temperature of 37°C, a flow rate of 135 mL/day, and a constant maintaining pH of 7.4±0.1 in $CO_2/N_2$ (5/95%) gas. Fibers were leached for 21 days to measure solubility, and ions dissolved in artificial body fluid and filtered at specific intervals (1, 4, 7, 11, 14 and 21 days) were analyzed using an inductively coupled plasma spectrometer (ICP). The dissolution rate constant ($K_{dis}$) was then calculated from the results using mathematical formula 4.

**Experimental Example 1: nonfibrous materials and production yield**

Using the constituents represented in table 2 below, the ceramic fiber composition was prepared according to an ordinary method, followed by preparation of ceramic fibers according to the existing process for RCF-based inorganic fibers. The average fiber particle diameter, the amount of nonfibrous material, and the production yield of the prepared ceramic fibers were measured and the results shown in table 2.
In table 2 below, Comparative Example 1 ($Al_2O_3$-$SiO_2$ based fibers) and Comparative Example 4 ($A_2O_3$-$SiO_2$-$ZrO_2$ based fibers) are examples of existing general ceramic fibers, whereas Comparative Example 5 ($Al_2O_3$-$SiO_2$-CaO-MgO-$ZrO_2$ based fibers) is a representative composition of existing biodegradable ceramic fibers.

Table 2

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Constituent (wt%) | $SiO_2$ | 66.3 | 62.1 | 62.5 | 66.5 | 59.8 | 49.5 | 62.8 | 67.2 | 64.9 | 77.5 |
| | CaO | 26.5 | 31.2 | 30.7 | 29.3 | 33.5 | | 31.3 | 20.1 | | 14.9 |
| | MgO | 6.5 | 5.6 | 5 | 2.9 | 6 | | 5.2 | 12.5 | | 4.9 |
| | $Al_2O_3$ | 0.1 | 0.6 | 0.6 | 0.5 | 0.2 | 49.9 | 0.5 | | 19.8 | 0.2 |
| | $B_2O_3$ | 0.5 | 0.2 | 1.1 | 0.6 | 0.2 | | | | | 0.3 |
| | $Na_2O$ | | 0.1 | 0.1 0.2 | 0.1 0.2 | 0.2 | | | | | |
| | $ZrO_2$ | | | | | | | | | 14.9 | 1.8 |
| | Impurity | 0.1 | 0.2 | 0.1 | 0.2 | 0.1 | 0.6 | 0.2 | 0.2 | 0.4 | 0.4 |
| | Sum | 100.0 | 100.0 | 100.0 | 100.0 | 100.0 | 100.0 | 100.0 | 100.0 | 100.0 | 100.0 |

(continued)

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Average Particle Diameter ($\mu$m) | | 3.7 | 3.8 | 3.7 | 3.9 | 3.8 | 3.7 | 3.9 | 3.4 | 3.8 | 4.5 |
| Nonfibrous Material (%) | | 32 | 30 | 28 | 33 | 31 | 30 | 36 | 40 | 32 | 40 |
| Production Yield (%) | | 72 | 73 | 77 | 75 | 76 | 80 | 63 | 67 | 52 | 60 |

Fibers with a large average fiber particle diameter and rough cross sections have reduced heat insulating effects as well as the disadvantage of painful handling. However, the average particle diameter of the fibers prepared using the constituents of the present invention is between 3.7~3.9 $\mu$m, which is lower than that (6 $\mu$m) of commercially available ceramic fibers. Since the average fiber particle diameter of the prepared fibers is low, the heat insulating effect should be excellent.

Compared to the amount of nonfibrous material, the present fibers constitute 28~33% of the total composition, whereas the existing ceramic fibers, Comparative Examples 1, 4 and 5, constitute 30~40%. Therefore, the amount of nonfibrous material was reduced. The present fibers even make up 72~80% of the total production yield, whereas the existing ceramic fibers constitute 52~80%, whereby the present invention can achieve a level equal to or higher than that of the existing fibers.

In Comparative Example 2, the composition was prepared by adding amounts of $SiO_2$, $CaO$ and $MgO$ in the composition range according to the present invention without including a flux such as $B_2O_3$ and $Na_2O$. The nonfibrous material was increased to a level of 36% while the production yield was at 63%. The composition without a flux negatively affects fiber formation due to an increase in the high temperature viscosity, resulting in increased nonfibrous materials and decreased production yield.

**Experimental Example 2: Coefficient of linear shrinkage during heating and biodegradability**

Coefficients of linear shrinkage during heating along with the dissolution rate constants ($K_{dis}$) of each fiber composition in artificial body fluid, similar to Examples and Comparative Examples in table 2, were measured and are shown in Table 3 below.

Table 3

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Constituent (wt%) | $SiO_2$ | 66.3 | 62.1 | 62.5 | 66.5 | 59.8 | 49.5 | 62.8 | 67.2 | 64.9 | 77.5 |
| | CaO | 26.5 | 31.2 | 30.7 | 29.3 | 33.5 | | 31.3 | 20.1 | 14.9 | 14.9 |
| | MgO $Al_2O_3$ | 6.5 | 5.6 | 5 | 2.9 | 6 | | 5.2 | 12.5 | | 4.9 |
| | | 0.1 | 0.6 | 0.6 | 0.5 | 0.2 | 49.9 | 0.5 | | 19.8 | 0.2 |
| | $B_2O_3$ | 0.5 | 0.2 | 1.1 | 0.6 | 0.2 | | | | | 0.3 |
| | $Na_2O$ | | 0.1 | | | 0.2 | | | | | |
| | $ZrO_2$ | | | | | | | | | 14.9 | 1.8 |
| | Impurity | 0.1 | 0.2 | 0.1 | 0.2 | 0.1 | 0.6 | 0.2 | 0.2 | 0.4 | 0.4 |
| | Sum | 100.0 | 100.0 | 100.0 | 100.0 | 100.0 | 100.0 | 100.0 | 100.0 | 100.0 | 100.0 |
| Coefficient of Linear Shrinkage at 1100°C (%) | 24 hours | 1.2 | 1.4 | 1.3 | 1.2 | 1.5 | 1.2 | 1.2 | 3.2 | 1.1 | 1.3 |
| | 168 hours | 1.5 | 1.7 | 1.6 | 1.4 | 1.8 | 1.4 | 1.5 | 3.5 | 1.7 | 2.1 |
| Dissolution rate constant ($K_{dis}$) ng/cm$^2$·hr | | 720 | 850 | 920 | 840 | 880 | 10 | 650 | 600 | 15 | 355 |

When the ceramic fibers prepared using the compositions of Examples 1 to 5 from Table 3 were heat treated at 1100°C for 24 hours, a baseline level of high temperature heat stability of less than 3% was achieved, along with a coefficient of linear shrinkage during heating of 1.2~1.5%. When the ceramic fibers were also heat treated over long periods at the same temperature for 168 hours, the coefficient of linear shrinkage during heating slightly increased, but they showed relatively low coefficients of linear shrinkage (1.4~1.8%) during heating. When the existing ceramic fibers, such as Comparative Examples 1, 4 and 5, were also heat treated at 1100°C for 24 hours, they had the same level as the developed articles, along with a coefficient of linear shrinkage during heating of 1.2~2.1%.

In addition, the heat resistance was lowered by addition of a flux, $B_2O_3$ or $Na_2O$, although the articles without a flux, as in Comparative Example 2, also showed a coefficient of shrinkage of 1.2~1.5%. The present invention could minimize the reduction in heat resistance by regulating the appropriate ratio of the flux.

For Comparative Examples 1 and 4, which have dissolution rate constants of less than 20 ng/cm$^2$hr similar to the existing RCF based fiber composition, inhalation of the fibers into the human body results in very low biodegradability. On the contrary, the present fiber composition had increased solubility in body fluid as well as a dissolution rate constant of 720~920 ng/cm$^2$hr. The dissolution rate constant for the composition of Comparative Example 5 is similar to the existing biodegradable fibers (355 ng/cm$^2$hr), but it is only 1/2~1/3 that of the compositions according to the present invention.

Furthermore, Comparative Example 2 includes no flux ($B_2O_3$ and $Na_2O$) in the composition according to the present invention. The dissolution rate constant is 650 ng/cm$^2$hr, whereas that of fibers prepared using the existing compositions is 720~920 ng/cm$^2$hr, whereby the dissolution rate constant is reduced relative to existing compositions. Therefore, a flux such as $B_2O_3$ or $Na_2O$ is effective in improving the biodegradability of ceramic fibers.

As indicated above, the ceramic fibers prepared using compositions of Examples according to the present invention have excellent biodegradability in artificial body fluid, excellent characteristics for fiber formation, and increased productivity due to high yield. In addition, when the ceramic fibers are heat treated at 1100°C for 24 hours, their coefficient of linear shrinkage is low, which is favorable for high temperature insulators.

## Claims

1.  A biodegradable ceramic fiber composition as a high temperature insulator comprising 58~67% by weight of $SiO_2$, 26~34% by weight of CaO, 2~8% by weight of MgO, 0.1~0.7% by weight of $Al_2O_3$, 0.2~1.1% by weight of $B_2O_3$, 0.3~1.1% by weight of $B_2O_3+Na_2O+K_2O$ and 1% by weight or less of an impurity selected from $TiO_2$ or $Fe_2O_3$.

2.  A biodegradable ceramic fiber composition according to claim 1, wherein the fiber composition satisfies General Formula 1:

General Formula 1

$$1 \leq (\% \text{ by weight of MgO}) / (\% \text{ by weight of } B_2O_3 \text{ and } Na_2O, \text{ in total}) \leq 23.$$

3.  Biodegradable ceramic fibers as high temperature insulators prepared using the fiber composition according to any one of claims 1 and 2, wherein the fibers have a coefficient of linear shrinkage during heating maintained at 1100°C for 24 hours of 3% or less as well as a dissolution rate constant in artificial body fluid of 700 ng/cm$^2$hr or higher.

4.  An insulator comprising the ceramic fibers according to claim 3.

## Patentansprüche

1.  Biologisch abbaubare Keramikfaserzusammensetzung als eine Hochtemperaturisolierung, enthaltend 58-67 Gewichts-% $SiO_2$, 26~34 Gewichts-% CaO, 2-8 Gewichts-% MgO, 0,1~0,7 Gewichts-% $Al_2O_3$, 0,2~1,1 Gewichts-% $B_2O_3$, 0,3~1,1 Gewichts-% $B_2O_3+Na_2O+K_2O$ und 1 Gewichts-% oder weniger einer Verunreinigung, ausgewählt aus $TiO_2$ und $Fe_2O_3$.

2.  Biologisch abbaubare Keramikfaserzusammensetzung nach Anspruch 1, wobei die Faserzusammensetzung der Allgemeinen Formel 1 genügt:

Allgemeine Formel 1

$$1 \leq (\text{Gewichts-\% MgO}) / (\text{Gewichts-\% } B_2O_3 \text{ und } Na_2O, \text{ in Summe}) \leq 23.$$

**3.** Biologisch abbaubare Keramikfasern als Hochtemperaturisolierung, hergestellt unter Verwendung der Faserzusammensetzung nach einem der Ansprüche 1 und 2, wobei die Fasern bei über 24 Stunden aufrechterhaltener Erhitzung bei 1100 °C einen linearen Schrumpfungskoeffizienten von 3 % oder weniger sowie eine in künstlicher Körperflüssigkeit konstante Auflösungsgeschwindigkeit von 700 ng/cm$^2$h oder mehr aufweisen.

**4.** Isolierung, umfassend die Keramikfasern nach Anspruch 3.

**Revendications**

**1.** Composition de fibres céramiques biodégradables en tant qu'isolant haute température comprenant 58 à 67 % en poids de $SiO_2$, 26 à 34 % en poids de CaO, 2 à 8 % en poids de MgO, 0,1 à 0,7 % en poids d'$Al_2O_3$, 0.2 à 1.1 % en poids de $B_2O_3$, 0.3 à 1.1 % en poids de $B_2O_3+Na_2O+K_2O$ et 1 % en poids ou moins d' une impureté choisie parmi $TiO_2$ ou $Fe_2O_3$

**2.** Composition de fibres céramiques biodégradables selon la revendication 1, dans laquelle la composition de fibres satisfait la formule générale 1 :

$$\text{Formule générale 1}$$
$$1 \leq (\text{\% en poids de MgO})/(\text{\% en poids de } B_2O_3 \text{ et } Na_2O, \text{ au total}) \leq 23.$$

**3.** Fibres céramiques biodégradables en tant qu'isolants haute température préparées à l'aide de la composition de fibres selon l'une quelconque des revendications 1 et 2, dans lesquelles les fibres ont un coefficient de contraction linéaire pendant un chauffage maintenu à 1 100 °C pendant 24 heures de 3 % ou moins ainsi qu'une constante de vitesse de dissolution dans un fluide corporel artificiel de 700 ng/cm$^2$h ou plus.

**4.** Isolant comprenant les fibres céramiques selon la revendication 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2873197 A
- US 4555492 A
- US 4055434 A
- US 3687850 A
- US 4604097 A
- WO 920781 A
- US 5055428 A
- WO 8705007 A
- WO 8912032 A
- WO 9315028 A
- WO 9415883 A
- WO 9716386 A
- US 5714421 A
- WO 2006048610 A1